# EUROPEAN PATENT APPLICATION

(11) **EP 4 488 033 A1**
(43) Date of publication of application: **08.01.2025**
(21) Application number: 23788000.0
(22) Date of filing: 03.02.2023
(51) Int. Cl.: B29C 63/02, B29C 65/02

(54) **METHOD FOR MANUFACTURING LAYERED PRODUCT AND DEVICE FOR MANUFACTURING LAYERED PRODUCT**

(30) Priority: 14.04.2022 JP 2022066827
(71) Applicant: IHI Corporation, Tokyo 135-8710 (JP)
(72) Inventor: SUZUKI Shotaro, Tokyo 135-8710 (JP); HIRATA Kensuke, Tokyo 135-8710 (JP); YUI Hironori, Tokyo 135-8710 (JP); TAKEUCHI Wataru, Tokyo 135-8710 (JP); DAIRAKU Itaru, Tokyo 135-8710 (JP)
(74) Representative: Marks & Clerk LLP
(86) International application number: PCT/JP2023/003665
(87) International publication number: WO 2023/199577

(57) **Abstract**

A method for manufacturing a layered product is a method for manufacturing a layered product by which a plurality of sheets are layered to manufacture the layered product. The method for manufacturing a layered product includes: a first arranging step of continuously arranging first sheet materials in a transfer passage for performing transfer of the sheets along a transfer direction of the transfer passage; and a second arranging step of continuously arranging second sheet materials along the transfer direction above the first sheet materials arranged side by side in the transfer passage. In the second arranging step, the second sheet materials are arranged at downstream positions of the transfer passage with respect to arrangement positions of the first sheet materials. In the first arranging step and the second arranging step, an arrangement pitch of the first sheet materials or the second sheet materials in the transfer direction is adjustable by tilting the first sheet materials or the second sheet materials with respect to the transfer direction.

## Description

### Technical Field

The present disclosure relates to a method for manufacturing a layered product and a device for manufacturing a layered product.

### Background Art

In the related art, a method and a device for manufacturing a fiber-reinforced substrate for manufacturing a continuous sheet by placing sheet-shaped fiber material pieces at an angle with respect to a transfer direction and performing heat fusion on side edges of adjacent fiber material pieces are known (For example, Japanese Unexamined Patent Publication No. 2017-202658).

### Citation List

### Patent Literature

Patent Literature 1: Japanese Unexamined Patent Publication No. 2017-202658

### Summary of Invention

### Technical Problem

Regarding such manufacturing methods and manufacturing devices, layered products may be manufactured by layering sheet materials. For example, it is conceivable that first sheet materials are continuously connected along a transfer direction, and different second sheet materials are continuously arranged on the connected first sheet materials to form a layered product. In this case, the second sheet materials are arranged and layered on the connected first sheet materials while the first sheet materials are transferred along a transfer passage, and thereby the layered product can be efficiently manufactured.

However, even in a case where the first sheet materials and the second sheet materials having the same size are used, the first sheet materials and the second sheet materials may have different sizes due to a manufacturing error or deformation such as sheet material deflection. In this case, if the first sheet materials and the second sheet materials are arranged successively, arrangement positions gradually become misaligned, and it becomes difficult to arrange the first sheet materials and the second sheet materials at the same timing. If the transfer of the sheet materials is interrupted, production efficiency of layered products may be reduced.

The present disclosure describes a method for manufacturing a layered product and a device for manufacturing a layered product by which a layered product can be manufactured efficiently.

### Solution to Problem

A method for manufacturing a layered product according to one aspect of the present disclosure is a method for manufacturing a layered product by which a plurality of sheets are layered to manufacture the layered product, the method including: a first arranging step of continuously arranging first sheet materials in a transfer passage for performing transfer of the sheets along a transfer direction of the transfer passage; and a second arranging step of continuously arranging second sheet materials along the transfer direction above the first sheet materials arranged in the transfer passage. In the second arranging step, the second sheet materials are arranged at downstream positions of the transfer passage with respect to arrangement positions of the first sheet materials. In the first arranging step and the second arranging step, an arrangement pitch of the first sheet materials or the second sheet materials in the transfer direction is adjustable by tilting the first sheet materials or the second sheet materials with respect to the transfer direction.

### Effects of Invention

According to some aspects of the present disclosure, a layered product can be efficiently manufactured.

### Brief Description of Drawings

FIG. 1 is a perspective view illustrating an outline of a device for manufacturing a layered product according to an embodiment of the present disclosure.
FIG. 2 is an exploded perspective view of a layered product.
FIG. 3 is an explanatory view illustrating arrangement of sheet materials in a method for manufacturing a layered product and the device for manufacturing a layered product according to embodiments.
FIG. 4(A) is an explanatory view illustrating adjustment of an arrangement pitch of the sheet materials in the method for manufacturing a layered product and the device for manufacturing a layered product according to the embodiments.
FIG. 4(B) is an explanatory view illustrating adjustment of an arrangement pitch of the sheet materials in the method for manufacturing a layered product and the device for manufacturing a layered product according to the embodiments.
FIG. 5 is a flowchart illustrating an adjustment process of the arrangement pitch in the method for manufacturing a layered product and the device for manufacturing a layered product according to the embodiments.
FIG. 6(A) is an explanatory view illustrating adjustment of an arrangement pitch of the sheet materials in the method for manufacturing a layered product and the device for manufacturing a layered product according to the embodiments.
FIG. 6(B) is an explanatory view illustrating adjustment of an arrangement pitch of the sheet materials in the method for manufacturing a layered product and the device for manufacturing a layered product according to the embodiments.
FIG. 7 is an explanatory view illustrating heat fusion of the sheet materials in the method for manufacturing a layered product and the device for manufacturing a layered product according to the embodiments.
FIG. 8(A) is an explanatory view illustrating heat fusion of the sheet materials in the method for manufacturing a layered product and the device for manufacturing a layered product according to the embodiments.
FIG. 8(B) is an explanatory view illustrating heat fusion of the sheet materials in the method for manufacturing a layered product and the device for manufacturing a layered product according to the embodiments.
FIG. 8(C) is an explanatory view illustrating heat fusion of the sheet materials in the method for manufacturing a layered product and the device for manufacturing a layered product according to the embodiments.
FIG. 9 is a flowchart illustrating a heat fusion control process in the method for manufacturing a layered product and the device for manufacturing a layered product according to the embodiments.

### Description of Embodiments

A method for manufacturing a layered product according to one aspect of the present disclosure is a method for manufacturing a layered product by which a plurality of sheets are layered to manufacture the layered product, the method including: a first arranging step of continuously arranging first sheet materials in a transfer passage for performing transfer of the sheets in a transfer direction of the transfer passage; and a second arranging step of continuously arranging second sheet materials along the transfer direction above the first sheet materials arranged in the transfer passage. In the second arranging step, the second sheet materials are arranged at downstream positions of the transfer passage with respect to arrangement positions of the first sheet materials. In the first arranging step and the second arranging step, an arrangement pitch of the first sheet materials or the second sheet materials in the transfer direction is adjustable by tilting the first sheet materials or the second sheet materials with respect to the transfer direction. According to the method for manufacturing a layered product according to the one aspect of the present disclosure, in the case where the first sheet materials are continuously arranged side by side with respect to the transfer passage and the second sheet materials are arranged side by side at the downstream positions from the first sheet materials, the arrangement pitch of the first sheet materials in the transfer direction can be adjusted by tilting the first sheet materials with respect to the transfer direction. In the case where the first sheet materials are continuously arranged side by side with respect to the transfer passage and the second sheet materials are arranged side by side at the downstream positions from the first sheet materials, the arrangement pitch of the second sheet materials in the transfer direction can be adjusted by tilting the second sheet materials with respect to the transfer direction. For example, even in a case where sheet widths of the first sheet materials and the second sheet materials are different from each other due to differences in size between the first sheet material and the second sheet material, the arrangement pitches of the first sheet materials and the second sheet materials in the transfer direction can be made to match by arranging the first sheet materials or the second sheet materials to be inclined with respect to the transfer direction. Accordingly, the first sheet materials and the second sheet materials can be arranged at the same timing. It is possible to efficiently manufacture a layered product in which the first sheet materials and the second sheet materials are layered.

In some aspects, the first sheet materials and the second sheet materials may be sheet materials having a parallelogramic shape with two opposite angles which are acute angles. In the first arranging step and the second arranging step, the arrangement pitch of the first sheet materials or the second sheet materials in the transfer direction may be adjustable by arranging one side of the first sheet materials or the second sheet materials to be inclined with respect to the transfer direction. In this case, in the first arranging step, the arrangement pitch of the first sheet materials in the transfer direction can be adjusted by arranging the first sheet materials to have one side inclined with respect to the transfer direction. In the second arranging step, the arrangement pitch of the second sheet materials in the transfer direction can be adjusted by arranging the second sheet materials to have one side inclined with respect to the transfer direction. Therefore, the first sheet materials and the second sheet materials can be arranged at the same timing. It is possible to efficiently manufacture a layered product in which the first sheet materials and the second sheet materials are layered.

According to some aspects, the method for manufacturing a layered product may further include: a first heat-fusing step of performing heat fusion of the first sheet materials arranged in the first arranging step to previously arranged first sheet materials; and a first heat-fusing step of performing heat fusion of the second sheet materials arranged in the second arranging step to previously arranged second sheet materials. In the first heat-fusing step and the second heat-fusing step, a heat fusion possible range having a width in the transfer direction may be set, the heat fusion may be performed on the first sheet materials and the previously arranged first sheet materials within the heat fusion possible range, and the heat fusion may be performed on the second sheet materials and the previously arranged second sheet materials within the heat fusion possible range. In a case where no heat fusion is performable on the first sheet materials or the second sheet materials within the heat fusion possible range in the first heat-fusing step and the second heat-fusing step, arrangement positions of the first sheet materials in the transfer direction in the first arranging step or arrangement positions of the second sheet materials in the transfer direction in the second arranging step may be adjusted. In this case, in the case where the first sheet material cannot be heat-fused within the heat fusion possible range in the first heat-fusing step, the arrangement positions of the first sheet materials in the transfer direction in the first arranging step are adjusted. In the case where the second sheet material cannot be heat-fused within the heat fusion possible range in the second heat-fusing step, the arrangement positions of the second sheet materials in the transfer direction in the second arranging step are adjusted. Accordingly, misalignment between the first sheet materials and the second sheet materials is reset and eliminated. Hence, the subsequent arrangement and heat fusion of the first sheet materials and the second sheet materials can be appropriately performed, and the layered product can be efficiently manufactured.

In some aspects, the first sheet materials and the second sheet materials may be fiber sheets in which fibers are arranged in a certain direction. In this case, the layered product in which a plurality of fiber sheets are layered can be efficiently manufactured.

A device for manufacturing a layered product according to another aspect of the present disclosure is a device for manufacturing a layered product which layers a plurality of sheets to manufacture the layered product, the device including: a first arrangement unit configured to continuously arrange first sheet materials in a transfer passage for performing transfer of the sheets along a transfer direction of the transfer passage; a second arrangement unit configured to continuously arrange second sheet materials along the transfer direction above the first sheet materials arranged in the transfer passage; and an arrangement adjusting unit configured to tilt the first sheet materials or the second sheet materials arranged in the transfer passage with respect to the transfer direction, and configured to adjust an arrangement pitch of the first sheet materials or the second sheet materials in the transfer direction. According to the device for manufacturing a layered product according to another aspect of the present disclosure, in the case where the first sheet materials are continuously arranged side by side with respect to the transfer passage and the second sheet materials are arranged side by side at the downstream positions from the first sheet materials, the arrangement pitch of the first sheet materials in the transfer direction can be adjusted by tilting the first sheet materials with respect to the transfer direction. In the case where the first sheet materials are continuously arranged side by side with respect to the transfer passage and the second sheet materials are arranged side by side at the downstream positions from the first sheet materials, the arrangement pitch of the second sheet materials in the transfer direction can be adjusted by tilting the second sheet materials with respect to the transfer direction. For example, even in a case where sheet widths of the first sheet materials and the second sheet materials are different from each other due to a difference between sizes thereof, the arrangement pitches of the first sheet materials and the second sheet materials in the transfer direction can be made to match by arranging the first sheet materials or the second sheet materials to be inclined with respect to the transfer direction. Accordingly, the first sheet materials and the second sheet materials can be arranged at the same timing. It is possible to efficiently manufacture a layered product in which the first sheet materials and the second sheet materials are layered.

Hereinafter, embodiments of the present disclosure will be described with reference to the drawings. In the description of the drawings, the same elements are given the same reference signs, and a repeated description is omitted.

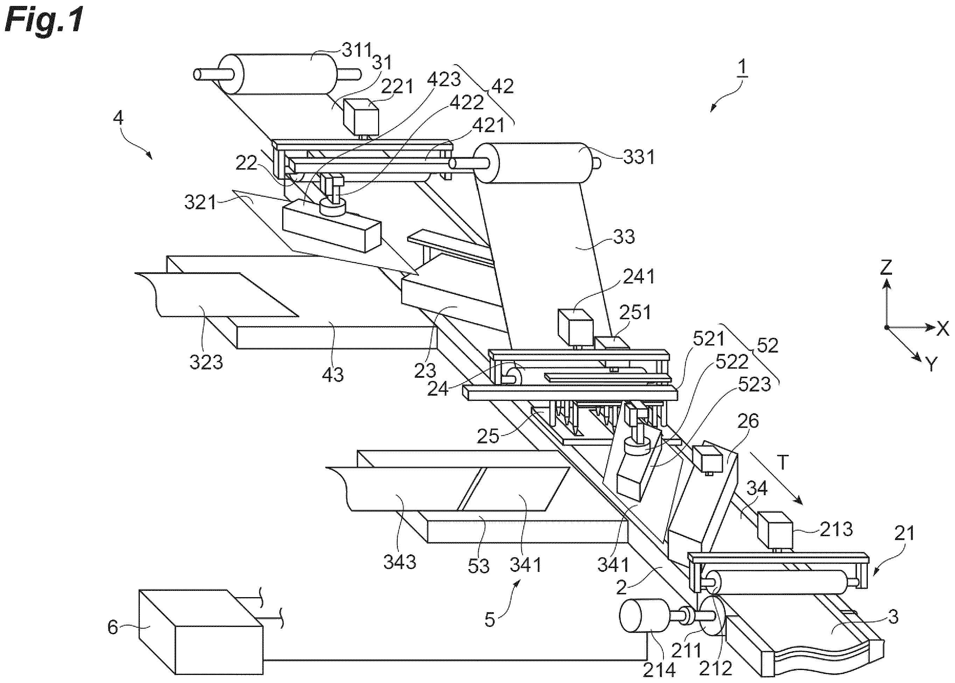

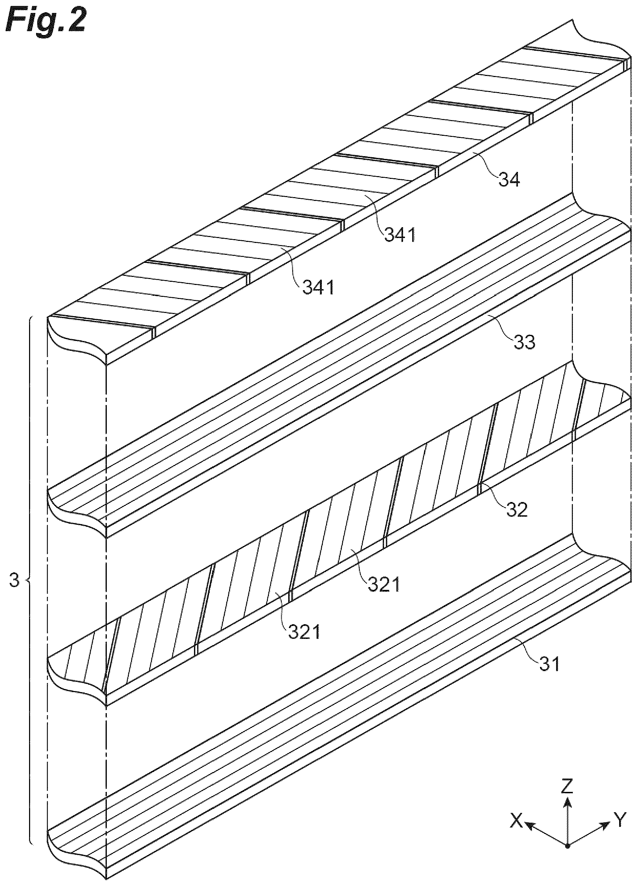

FIG. 1 is a perspective view illustrating an outline of a device for manufacturing a layered product according to an embodiment of the present disclosure. FIG. 2 is an exploded perspective view of a layered product. FIG. 2 illustrates a plurality of sheets to be layered in an exploded manner.

As illustrated in FIG. 1, a device 1 for manufacturing a layered product is a device that layers a plurality of sheets to manufacture a layered product 3. For example, the device 1 for manufacturing a layered product sequentially stacks and layers sheets 31 to 34 while transferring the sheets 31 to 34 along a transfer passage 2. The transfer passage 2 is made of, for example, a plate material extending in a transfer direction T. As illustrated in FIG. 2, the layered product 3 is an elongated sheet. The layered product 3 has, for example, a four-layer layered structure in which the four sheets 31, 32, 33, and 34 are layered. The sheets 31 to 34 are, for example, fiber sheets formed by arranging fibers in a predetermined direction. The sheets 31 to 34 are formed by impregnating a fiber material with a resin. For example, such as carbon, aramid, or glass is used as the fiber material. Such as an epoxy resin is used as the resin. The resin may be a thermoplastic resin or a thermosetting resin.

The sheet 31 and the sheet 33 are formed by arranging fibers in a longitudinal direction. The sheet 32 and the sheet 34 are formed by arranging fibers obliquely with respect to the longitudinal direction. The fibers of the sheet 32 and the fibers of the sheet 34 are arranged to intersect each other. The sheet 32 is formed by connecting a plurality of sheet materials 321 in the longitudinal direction. The sheet 34 is formed by connecting a plurality of sheet materials 341 in the longitudinal direction.

In FIG. 1, the device 1 for manufacturing a layered product includes a pull-out roller 21, a first pressing roller 22, a first heat fusion unit 23, a second pressing roller 24, a second heat fusion unit 25, a third heat fusion unit 26, a first arrangement unit 4, a second arrangement unit 5, and a controller 6.

The pull-out roller 21 is a roller for transferring the layered product 3 and pulling out the sheet 31. The pull-out roller 21 is mounted at a downstream position of the transfer passage 2. The pull-out roller 21 includes a driving roller 211 and a movable roller 212. The driving roller 211 and the movable roller 212 are roller members that rotate about a horizontal axis orthogonal to the transfer direction T. For example, the movable roller 212 is provided above the driving roller 211. The movable roller 212 is configured to approach and separate from the driving roller 211 by an operation of a lifting-lowering machine 213. The driving roller 211 is rotatably provided by an operation of a motor 214. The layered product 3 including the sheet 31 is sandwiched between the driving roller 211 and the movable roller 212. Rotation of the driving roller 211 causes the layered product 3 to be transferred downstream in the transfer direction T, and the sheet 31 is pulled out from a raw material roll 311. That is, the raw material roll 311 around which the sheet 31 is wound is mounted at an upstream position of the transfer passage 2, and the sheet 31 is pulled out from the raw material roll 311 by an operation of the pull-out roller 21.

The first pressing roller 22 is provided at a downstream position of the raw material roll 311 in the transfer passage 2. The first pressing roller 22 is a roller for pressing the sheet 31 pulled out from the raw material roll 311 so that the sheet does not rise up or separate from the transfer passage 2. The first pressing roller 22 is configured to be rotatable about a horizontal axis orthogonal to the transfer direction T. The first pressing roller 22 is configured to be lifted or lowered by an operation of the lifting-lowering machine 221.

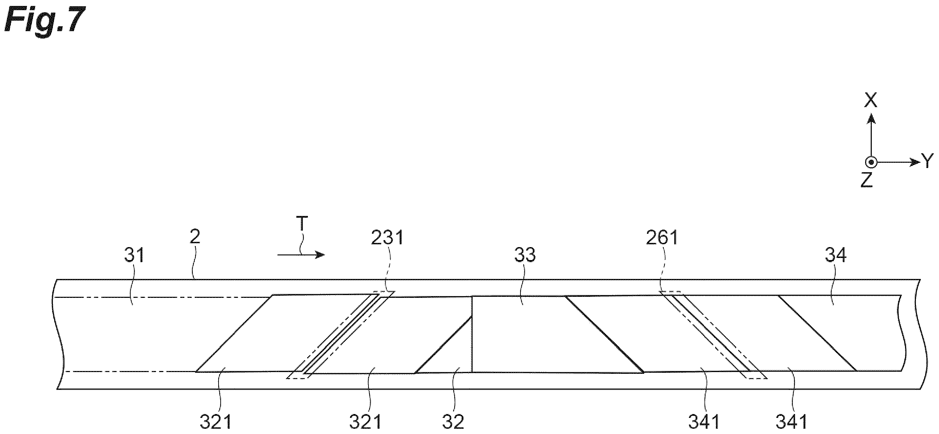

The first heat fusion unit 23 is a mechanism for performing heat fusion on the sheet materials 321 arranged on the sheet 31. The first heat fusion unit 23 is provided at a downstream position of the first pressing roller 22 in the transfer passage 2. The sheet materials 321 are first sheet materials for forming the sheet 32. A plurality of sheet materials 321 are continuously connected to form the sheet 32. The sheet materials 321 are arranged on the sheet 31 by the first arrangement unit 4. The first heat fusion unit 23 forms the sheet 32 by performing heat fusion on an end portion of a preceding sheet material 321 and an end portion of the subsequent sheet material 321 arranged on the sheet 31 by heating fusion, ultrasonic heat fusion, or the like. The first heat fusion unit 23 has a heat fusion possible range 231 set as a range in which the first heat fusion unit 23 can perform heat fusion. For example, as illustrated in FIG. 7, the heat fusion possible range 231 is a region below the first heat fusion unit 23 and is a region having a width in the transfer direction T. The heat fusion possible range is set depending on a structure of the first heat fusion unit 23 or the like. In a case where a connection portion between the preceding sheet material 321 and the subsequent sheet material 321 is within the heat fusion possible range, the heat fusion of the preceding sheet material 321 and the subsequent sheet material 321 is appropriately performed by the first heat fusion unit 23. On the other hand, in a case where the connection portion between the preceding sheet material 321 and the subsequent sheet material 321 is not within the heat fusion possible range 231, it is not possible to perform the heat fusion between the preceding sheet material 321 and the subsequent sheet material 321 using the first heat fusion unit 23.

The second pressing roller 24 is provided at a downstream position of the first heat fusion unit 23 in the transfer passage 2. The second pressing roller 24 is a roller for pressing the sheet 33 pulled out from a raw material roll 331 so that the sheet does not rise up or separate from the transfer passage 2. The sheet 33 is a sheet layered on the sheet 32. The raw material roll 331 is mounted at a position upstream from the second pressing roller 24 and separated upward from the transfer passage 2. The sheet 33 is pulled out from the raw material roll 331 by an operation of the pull-out roller 21 described above. An edge sensor is provided in the vicinity of the raw material roll 331. The edge sensor is a sensor for detecting an edge of the sheet 33 pulled out from the raw material roll 331. The second pressing roller 24 is rotatably provided about a horizontal axis orthogonal to the transfer direction T. In addition, the second pressing roller 24 is provided to be lifted or lowered by an operation of the lifting-lowering machine 241.

The second heat fusion unit 25 is a mechanism for performing heat fusion of the sheet 33 laid on the sheet 32 to the sheet 32. The second heat fusion unit 25 is provided at a downstream position of the second pressing roller 24 in the transfer passage 2. The second heat fusion unit 25 performs heat fusion of the sheet 33 to the sheet 32 by heating fusion, ultrasonic heat fusion, or the like. The second heat fusion unit 25 brings the sheet 33 into close contact with the sheet 32 so that the sheet 33 does not rise up or separate from the sheet 32. A lifting-lowering machine 251 is provided above the second heat fusion unit 25. The second heat fusion unit 25 can be lifted or lowered by an operation of the lifting-lowering machine 251.

The third heat fusion unit 26 is a mechanism for performing heat fusion on the sheet materials 341 arranged on the sheet 33. The third heat fusion unit 26 is provided on a downstream side of the second heat fusion unit 25 in the transfer passage 2. The sheet materials 341 are second sheet materials for forming the sheet 34. A plurality of sheet materials 341 are continuously connected to form the sheet 34. The sheet materials 341 are arranged on the sheet 33 by the second arrangement unit 5. The third heat fusion unit 26 forms the sheet 34 by performing heat fusion on an end portion of a preceding sheet material 341 and an end portion of the subsequent sheet material 341 arranged on the sheet 33 by heating fusion, ultrasonic heat fusion, or the like. The third heat fusion unit 26 has a heat fusion possible range 261 set as a range in which the third heat fusion unit 26 can perform heat fusion. For example, as illustrated in FIG. 7, the heat fusion possible range 261 is a region below the third heat fusion unit 26 and is a region having a width in the transfer direction T. The heat fusion possible range is set depending on a structure of the third heat fusion unit 26 or the like. In a case where a connection portion between the preceding sheet material 341 and the subsequent sheet material 341 is within the heat fusion possible range, the heat fusion of the preceding sheet material 341 and the subsequent sheet material 341 is appropriately performed by the third heat fusion unit 26. On the other hand, in a case where the connection portion between the preceding sheet material 341 and the subsequent sheet material 341 is not within the heat fusion possible range 261, it is not possible to perform the heat fusion between the preceding sheet material 341 and the subsequent sheet material 341 by the third heat fusion unit 26.

The first arrangement unit 4 is a mechanism that continuously arranges the sheet materials 321 side by side in the transfer direction T in the transfer passage 2. The first arrangement unit 4 arranges the sheet materials 321 at upstream positions from the first heat fusion unit 23 on the sheet 31 transferred along the transfer passage 2. The first arrangement unit 4 is configured to includes, for example, a first arrangement mechanism 42. The first arrangement mechanism 42 is a mechanism that arranges the sheet materials 321 at predetermined positions on the sheet 31 in the transfer passage 2.

The first arrangement mechanism 42 rotates the sheet materials 321 on a first sub transfer passage 43 so that the sheet materials point in a predetermined direction. The first arrangement mechanism 42 moves and arranges the sheet materials 321 on the sheet 31 in the transfer passage 2. The first sub transfer passage 43 is a transfer passage for performing transfer of the sheet materials 321 to the transfer passage 2 side. The first sub transfer passage 43 is installed on a side of the transfer passage 2. The first sub transfer passage 43 is provided toward the transfer passage 2. The first arrangement mechanism 42 includes a rail unit 421, a movable unit 422, and a holding unit 423. The rail unit 421 is installed to cross over above the transfer passage 2 from a position of an end portion of the first sub transfer passage 43. The movable unit 422 is a movable body capable of reciprocating along the rail unit 421. The movable unit 422 is rotatable about an axis in a vertical direction and is movable up and down. Regarding rotational drive control of the movable unit 422, rotation thereof may be adjusted by forming a stopper at a position where the movable unit 422 is rotated. The rotational drive control of the movable unit 422 may be performed by other means. The rotational drive control of the movable unit 422 may be performed by controlling a rotation angle by, for example, servo control. The holding unit 423 is attached to a lower portion of the movable unit 422. The holding unit 423 is configured to be able to hold the sheet material 321 by gripping, air suction, or the like. The first arrangement mechanism 42 holds the sheet material 321 on the first sub transfer passage 43 using the holding unit 423. The first arrangement mechanism 42 moves and transfers the sheet materials 321 upward by the movable unit 422 along the rail unit 421 to a position above the transfer passage 2. The first arrangement mechanism 42 rotates and lowers the sheet materials 321 clockwise using the movable unit 422. The first arrangement mechanism 42 releases the holding by the holding unit 423 to place the sheet materials 321 on the sheet 31 laid on the transfer passage 2.

The second arrangement unit 5 is a mechanism that continuously arranges the sheet materials 341 side by side in the transfer direction T in the transfer passage 2. The second arrangement unit 5 arranges the sheet materials 341 at upstream positions from the third heat fusion unit 26 on the sheet 33 being transferred along the transfer passage 2. The second arrangement unit 5 includes, for example, a second arrangement mechanism 52. The second arrangement mechanism 52 is a mechanism that arranges the sheet materials 341 at predetermined positions on the sheet 33 in the transfer passage 2.

The second arrangement mechanism 52 rotates the sheet materials 341 on a second sub transfer passage 53 to a predetermined direction. The second arrangement mechanism 52 moves the sheet materials 341 to arrange the sheet materials 341 on the sheet 33 in the transfer passage 2. The second sub transfer passage 53 is a transfer passage for transferring the sheet materials 341 to the transfer passage 2. The second sub transfer passage 53 is provided on a side of the transfer passage 2. The second sub transfer passage 53 is provided toward the transfer passage 2. The second arrangement mechanism 52 includes a rail unit 521, a movable unit 522, and a holding unit 523. The rail unit 521 is installed to cross over the transfer passage 2 from a position of an end portion of the second sub transfer passage 53. The movable unit 522 is a movable body capable of reciprocating along the rail unit 521. The movable unit 522 is rotatable about an axis in the vertical direction and is movable up and down. Regarding rotational drive control of the movable unit 522, rotation of the movable unit 522 may be adjusted by forming a stopper at a position to which the movable unit 522 can be rotated. The rotational drive control of the movable unit 522 may be performed by other means. The rotational drive control of the movable unit 522 may be performed by, for example, controlling a rotation angle using servo control. The holding unit 523 is attached to a lower portion of the movable unit 522. The holding unit 523 is configured to be able to hold the sheet material 341 by gripping, air suction, or the like. The second arrangement mechanism 52 holds the sheet materials 341 on the second sub transfer passage 53 by the holding unit 523. The second arrangement mechanism 52 moves and transfers the sheet materials 341 upward by the movable unit 522 along the rail unit 521 to a position above the transfer passage 2. The second arrangement mechanism 52 rotates and lowers the sheet materials 341 counterclockwise using the movable unit 522. The second arrangement mechanism 52 lowers the sheet materials 341 and releases the holding by the holding unit 523 to place the sheet materials 341 on the sheet 33 laid in the transfer passage 2.

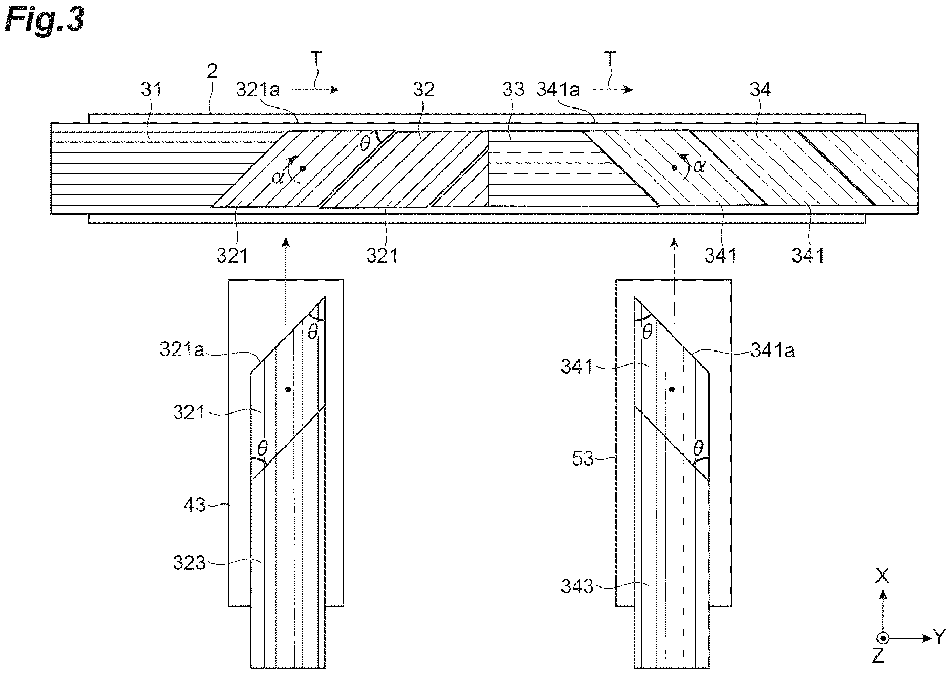

FIG. 3 is a view illustrating arrangement of the sheet materials in the method for manufacturing a layered product and the device for manufacturing a layered product according to the embodiments. FIG. 3 illustrates an outline of the arrangement of the sheet materials 321 and the sheet materials 341 by the first arrangement unit 4 and the second arrangement unit 5. FIG. 3 is a plan view of the transfer passage 2 from above.

As illustrated in FIG. 3, a sheet 31 is placed in the transfer passage 2. A sheet 32 is placed on the sheet 31. A sheet 33 is placed on the sheet 32. A sheet 34 is placed on the sheet 33. The sheet 31 is pulled out from the raw material roll 311 and disposed on the transfer passage 2. On the transfer passage 2, a plurality of sheet materials 321 transferred from the first sub transfer passage 43 are sequentially connected to form the sheet 32. The sheet 33 is pulled out from the raw material roll 331 and disposed on the transfer passage 2. On the transfer passage 2, a plurality of sheet materials 341 transferred from the second sub transfer passage 53 are sequentially connected to form the sheet 34.

The sheet 31 has a structure in which fibers are arranged in the longitudinal direction. An arrangement direction of the fibers of the sheet 32 is a direction oblique to the longitudinal direction. For example, in the sheet 32, the plurality of sheet materials 321 are connected to each other so that the arrangement direction of the fibers is oblique, and thereby the fibers are arranged in the direction oblique to the longitudinal direction. The sheet material 321 is formed by obliquely cutting a sheet 323 in the first sub transfer passage 43. In the first sub transfer passage 43, fibers are arranged in the longitudinal direction in the sheet 323. The sheet materials 321 are rotated about an axis in the vertical direction and connected to the sheet 32 on the transfer passage 2. Accordingly, the sheet 32 has a structure in which fibers are arranged in the direction oblique to the longitudinal direction. More specifically, the sheet material 321 is cut on the first sub transfer passage 43 so that a front right corner and a rear left corner toward the transfer passage 2 have an acute angle θ. The sheet material 321 has a parallelogramic shape with two opposite angles which are acute angles. An elongated sheet 32 is formed by connecting, to the sheet 32, the sheet material 321 rotated clockwise by an angle α obtained by subtracting the angle θ from 90 degrees. That is, the elongated sheet 32 is formed by connecting, to the sheet 32, the sheet material 321 rotated so that a cut side 321a of the sheet material 321 cut out in the first sub transfer passage 43 becomes a side of the sheet 32. Here, when the angle θ in the sheet material 321 is 45 degrees, the sheet 32 has a structure in which the fibers are arranged at an oblique angle of 45 degrees from a front left side to a rear right side when viewed from the transfer direction T. In FIG. 3, the sheet material 321 has the parallelogramic shape, but the sheet material 321 may have a shape obtained by rounding corners of a parallelogram. The sheet material 321 may have a shape in which a notch is formed in a part of the parallelogram.

In FIG. 3, the sheet 33 has a structure in which fibers are arranged in the longitudinal direction. An arrangement direction of the fibers of the sheet 34 is a direction that is oblique to the longitudinal direction and intersects the direction of the fibers of the sheet 32. For example, in the sheet 34, the plurality of sheet materials 341 are connected to each other so that the arrangement direction of the fibers is oblique, and thereby the fibers are arranged in the direction oblique to the longitudinal direction. The sheet material 341 is formed by obliquely cutting a sheet 343 in the second sub transfer passage 53. In the second sub transfer passage 53, fibers are arranged in the longitudinal direction in the sheet 343. The sheet 343 is rotated about an axis in the vertical direction and connected to the sheet 34 on the transfer passage 2. Accordingly, the sheet 34 has a structure in which fibers are arranged in the direction oblique to the longitudinal direction. More specifically, the sheet material 341 is cut on the second sub transfer passage 53 so that a left front corner and a right rear corner toward the transfer passage 2 have an acute angle Θ. The sheet material 341 has a parallelogramic shape with two opposite angles which are acute angles. Similarly to the shape of the sheet material 321, the shape of the sheet material 341 may be a shape obtained by rounding the corners of the parallelogramic shape or a shape in which a notch is formed in a part of the parallelogram. An elongated sheet 34 is formed by connecting, to the sheet 34, the sheet material 341 rotated counterclockwise by an angle α obtained by subtracting the angle θ from 90 degrees. That is, the elongated sheet 34 is formed by connecting, to the sheet 34, the sheet material 341 rotated so that a cut side 341a of the sheet material 341 cut out in the second sub transfer passage 53 becomes a side of the sheet 34. Here, when the angle θ in the sheet material 341 is 45 degrees, the sheet 34 has a structure in which the fibers are arranged at an oblique angle of 45 degrees from a front right side to a rear left side when viewed from the transfer direction T.

In FIG. 1, the controller 6 is an electronic control unit that controls the entire device in the device 1 for manufacturing a layered product. The controller 6 is configured of a computer including, for example, a CPU, a ROM, and a RAM. The controller 6 receives a detection signal as an input from a sensor such as an edge sensor. The controller 6 outputs a drive signal to an actuator such as the motor 214. The controller 6 outputs an operation signal to operating equipment such as the first heat fusion unit 23, the first arrangement mechanism 42, and the second arrangement mechanism 52.

The controller 6 functions as an arrangement adjusting unit that tilts the sheet materials 321 or the sheet materials 341 arranged in the transfer passage 2 with respect to the transfer direction T and can adjust an arrangement pitch of the sheet materials 321 or the sheet materials 341 in the transfer direction. For example, the controller 6 outputs an operation signal to the first arrangement unit 4, thereby positioning the sheet materials 321 to be inclined with respect to the transfer direction T and adjusting the arrangement pitch of the sheet materials 321 along the transfer direction. The controller 6 outputs an operation signal to the second arrangement unit 5, thereby causing the sheet materials 341 to be arranged to be inclined with respect to the transfer direction T and adjusting the arrangement pitch of the sheet materials 341 in the transfer direction. The arrangement pitch is a feed pitch of the sheet materials 321 or the sheet materials 341 in the transfer direction, and corresponds to a sheet length in the transfer direction.

As illustrated in FIG. 3, when the sheet materials 321 and the sheet materials 341 can be repeatedly arranged at the same timing, the sheet 32 and the sheet 34 can be smoothly formed. The sheets 31 to 34 can be layered in a short time. The layered product 3 can be efficiently manufactured. However, if the arrangement pitches of the sheet materials 321 and the sheet materials 341 are different from each other, the sheet materials 321 and the sheet materials 341 cannot be arranged at the same timing. The transfer of the sheet 32, the sheet 34, and the like has to be stopped or delayed in the transfer passage 2. Manufacturing efficiency of the layered product 3 is reduced. For example, if the arrangement pitch of the sheet materials 321 connected to the sheet 32 is different from the arrangement pitch of the sheet materials 341 connected to the sheet 34, it is difficult to arrange the sheet materials 321 and the sheet materials 341 at the same timing. A difference in the sheet width due to curving, deflection, manufacturing errors, and the like of the sheet materials 321 and the sheet materials 341 can cause a difference between the arrangement pitch of the sheet materials 321 and the arrangement pitch of the sheet materials 341. That is, a difference in an actual size of the sheet material itself can cause a difference in the arrangement pitch (feed pitch) between the sheet materials 321 and the sheet materials 341.

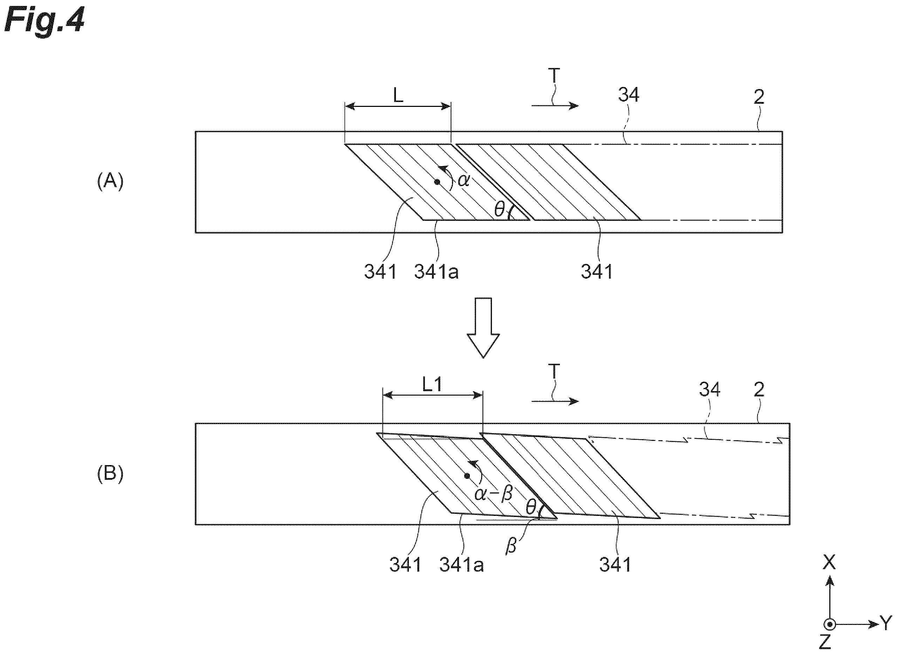

Therefore, the controller 6 can adjust the arrangement pitch of the sheet materials 321 or the sheet materials 341 arranged in the transfer direction in the transfer passage 2. Accordingly, the sheet 32 and the sheet 34 are smoothly formed. For example, in a case where the arrangement pitch of the sheet materials 341 is longer than the arrangement pitch of the sheet materials 321, the controller 6 arranges the plurality of sheet materials 341 to be inclined with respect to the transfer direction T as illustrated in FIGS. 4(A) and 4(B). The controller 6 adjusts the arrangement pitch so that the arrangement pitch of the plurality of sheet materials 341 is shortened. For example, in a case where deviation of the arrangement pitches of the sheet materials falls within a predetermined range, the subsequent heat-fusing step can be performed at the same time, so that the manufacturing efficiency is not reduced. However, if the deviation in the arrangement pitches of the sheet materials exceeds the predetermined range, both heat-fusing steps for the sheet materials 321 and the sheet materials 341 cannot be performed at the same time. Hence, adjustment of the arrangement pitches is required.

FIG. 4(A) and FIG. 4(B) are views illustrating adjustment of the arrangement pitches of the sheet materials in the method for manufacturing a layered product and the device for manufacturing a layered product according to the embodiments. FIG. 4(A) illustrates the arrangement of the plurality of sheet materials 341 in a case where normal control is performed without deviation in the arrangement pitches. Each of the plurality of sheet materials 341 is rotated counterclockwise by the angle α from the second sub transfer passage 53. The sheet materials 341 are arranged on the transfer passage 2 such that the cut sides 341a of the sheet materials 341 are parallel to the transfer direction T in the transfer passage 2. At this time, the arrangement pitch of the sheet materials 341 is L. Here, the arrangement pitch is a length in the transfer direction T between a connection side and a connection side which face each other in the sheet material. The connection side is a side connected to the preceding or subsequent sheet material. As illustrated in FIG. 4(A), when one side connecting the connection side and the connection side in the sheet material 341 is parallel to the transfer direction T, both the arrangement pitch of the sheet material 341 and a dimension of one side connecting the connection side and the connection side have the same length. The length of the one side connecting the connection side and the connection side is proportional to a dimension of a sheet width of the sheet material 341.

On the other hand, FIG. 4(B) illustrates the arrangement of the plurality of sheet materials 341 in a case where the arrangement adjustment control is performed. Each of the plurality of sheet materials 341 is rotated counterclockwise by an angle α-β from the second sub transfer passage 53. The sheet materials 341 are arranged on the transfer passage 2, with the cut sides 341a of the sheet materials 341 being inclined by an angle β from the transfer direction T in the transfer passage 2. At this time, the arrangement pitch of the sheet materials 341 is L1. That is, the arrangement pitch L1 is shorter than the arrangement pitch L (L > L1). Accordingly, even in a case where the arrangement pitch deviates due to a sheet width of the sheet material 341 being larger than a sheet width of the sheet material 321, or the like, the arrangement pitch of the sheet material 341 can be shortened to eliminate or reduce the deviation from the arrangement pitch of the sheet material 321.

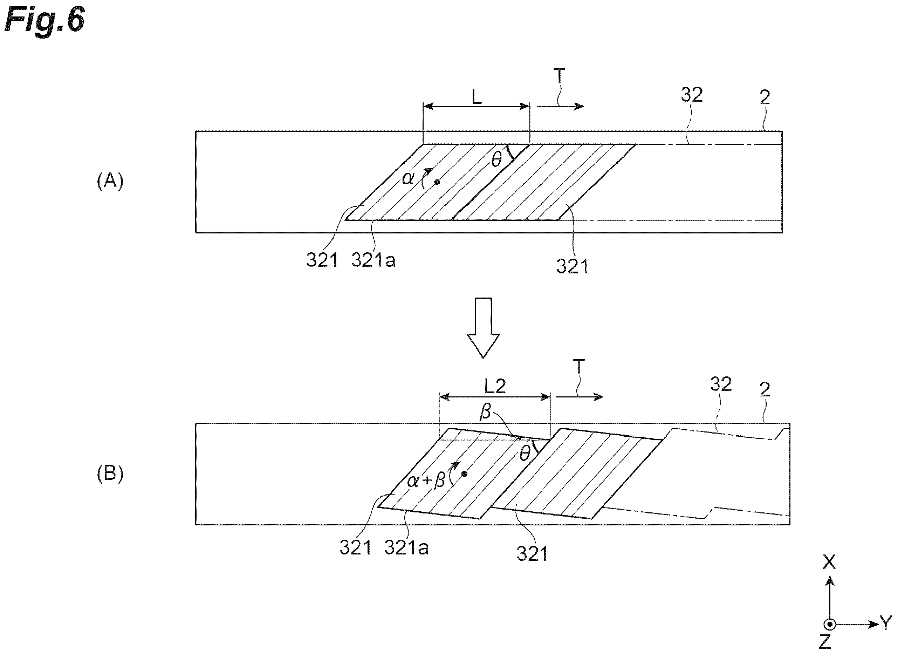

In FIGS. 4(A) and 4(B), the arrangement pitch of the sheet materials 341 is shortened to curb a delay of an arrangement timing, but the arrangement pitch of the sheet materials 321 may be elongated to adjust the arrangement timing. For example, as illustrated in FIGS. 6(A) and 6(B), the sheet materials 321 may be tilted with respect to the transfer direction T such that adjustment may be performed to elongate the arrangement pitch of the sheet materials 321.

FIG. 6(A) illustrates the arrangement of the plurality of sheet materials 321 in a case where normal control is performed without deviation in the arrangement pitches. Each of the plurality of sheet materials 321 is rotated clockwise by the angle α from the first sub transfer passage 43. The sheet materials 321 are arranged on the transfer passage 2 such that the cut sides 321a of the sheet materials 321 are parallel to the transfer direction T in the transfer passage 2. At this time, the arrangement pitch of the sheet material 321 is L.

On the other hand, FIG. 6(B) illustrates the arrangement of the plurality of sheet materials 321 in the case where the arrangement adjustment control is performed. Each of the plurality of sheet materials 321 is rotated clockwise by an angle α+β from the first sub transfer passage 43. The sheet materials 341 are arranged on the transfer passage 2, with the cut sides 321a of the sheet materials 341 being inclined by the angle β from the transfer direction T in the transfer passage 2. At this time, the arrangement pitch of the sheet material 321 is L2. The arrangement pitch L2 is longer than the arrangement pitch L (L < L2). Accordingly, even in a case where the arrangement pitch deviates due to the sheet width of the sheet material 321 being smaller than the sheet width of the sheet material 341, or the like, the arrangement pitch of the sheet material 321 can be elongated to eliminate or reduce the deviation from the arrangement pitch of the sheet material 341.

Next, operations of the device 1 for manufacturing a layered product according to the present embodiment and the method for manufacturing a layered product will be described.

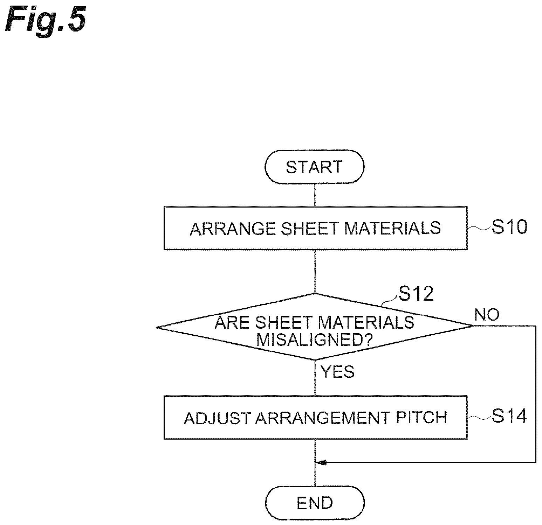

FIG. 5 is a flowchart illustrating an adjustment process of the arrangement pitches in the method for manufacturing a layered product and the device for manufacturing a layered product according to the embodiments.

First, in FIG. 1, the device 1 for manufacturing a layered product is operated by, for example, turning on a power switch. A control signal is output from the controller 6 to an actuator, operation equipment, and the like. For example, a drive signal is output from the controller 6 to the motor 214. The pull-out roller 21 operates. The sheet 31 is pulled out from the raw material roll 311 and is transferred to the transfer passage 2. The operation of the pull-out roller 21 causes the sheet 33 to be pulled out from the raw material roll 331 and be transferred to the transfer passage 2. The sheet 323 is pulled out and transferred to the first sub transfer passage 43. The sheet 323 is pulled out from, for example, a raw material roll. The sheet 343 is pulled out and transferred to the second sub transfer passage 53. The sheet 343 is pulled out from, for example, a raw material roll.

The sheet 323 transferred to the first sub transfer passage 43 is cut by an operation of a cutting mechanism. For example, when an operation signal is output from the controller 6 to the cutting mechanism, the sheet materials 321 are cut out from the sheet 323 by movement of a cutter. At this time, as illustrated in FIG. 3, the cutter can move obliquely with respect to the longitudinal direction of the sheet 323, thereby cutting out the sheet materials 321 as parallelograms having opposite angles which are acute angles.

The sheet 343 transferred to the second sub transfer passage 53 is cut by the operation of the cutting mechanism. For example, when an operation signal is output from the controller 6 to the cutting mechanism, the sheet materials 341 are cut out from the sheet 343 by movement of a cutter. At this time, as illustrated in FIG. 3, the cutter can move obliquely with respect to the longitudinal direction of the sheet 343, thereby cutting out the sheet materials 341 as parallelograms having opposite angles which are acute angles.

The sheet material 321 cut out in the first sub transfer passage 43 is moved from the first sub transfer passage 43 to the transfer passage 2 by an operation of the first arrangement mechanism 42. When an operation signal is output from the controller 6 to the first arrangement mechanism 42, the first arrangement mechanism 42 operates. In the first sub transfer passage 43, the sheet material 321 is held by the holding unit 423. The sheet material 321 is moved upward by the movable unit 422. The sheet material 321 is moved above the transfer passage 2 along the rail unit 421. The sheet material 321 is rotated clockwise by a predetermined angle by the movable unit 422. The sheet material 321 is disposed on the sheet 31 in the transfer passage 2 upon release of the holding by the holding unit 423. FIG. 1 illustrates a state in which the sheet material 321 is held by the holding unit 423 and are moved upward.

The sheet material 341 cut out in the second sub transfer passage 53 is moved from the second sub transfer passage 53 to the transfer passage 2 by an operation of the second arrangement mechanism 52. When an operation signal is output from the controller 6 to the second arrangement mechanism 52, the second arrangement mechanism 52 operates. In the second sub transfer passage 53, the sheet material 341 is held by the holding unit 523. The sheet material 341 is moved upward by the movable unit 522. The sheet material 341 is moved above the transfer passage 2 along the rail unit 521. The sheet material 341 is rotated counterclockwise by a predetermined angle by the movable unit 522. The sheet material 341 is disposed on the sheet 33 in the transfer passage 2 upon release of the holding by the holding unit 523. FIG. 1 illustrates a state in which the sheet material 341 is held by the holding unit 523 and are moved over the transfer passage 2.

The sheet material 321 disposed on the sheet 31 in the transfer passage 2 is connected to a preceding sheet material 321 to become the sheet 32. An operation signal is output from the controller 6 to the first heat fusion unit 23. An operation of the first heat fusion unit 23 causes, as a first heat-fusing step, heat fusion of the sheet material 321 to the preceding sheet material 321. As illustrated in FIG. 3, in a case where the sheet material 321 is rotated clockwise by the angle α, the cut side 321a becomes parallel to the transfer direction T. The sheet material 321 is connected to the preceding sheet material 321 such that the cut side 321a becomes a side of the sheet 32.

The sheet material 341 disposed on the sheet 33 in the transfer passage 2 is connected to a preceding sheet material 341 to become the sheet 34. An operation signal is output from the controller 6 to the third heat fusion unit 26. An operation of the third heat fusion unit 26 causes, as a second heat-fusing step, heat fusion of the sheet material 341 to the preceding sheet material 341. As illustrated in FIG. 3, in a case where the sheet material 341 is rotated counterclockwise by the angle α, the cut side 341a becomes parallel to the transfer direction T. The sheet material 341 is connected to the preceding sheet material 341 such that the cut side 341a becomes a side of the sheet 34.

In FIG. 1, the sheet material 341 is connected by the third heat fusion unit 26 to form the sheet 34, and thereby the sheets 31 to 34 are layered to manufacture the layered product 3.

An adjustment process of the arrangement pitch in FIG. 5 is a process of adjusting the arrangement pitch of the sheet material 321 or the sheet material 341 in the transfer passage 2 in a case where misalignment between the sheet materials 321 and the sheet materials 341 occurs. According to the flowchart in FIG. 5, the process may be executed by automatic control of the controller 6 in a case where the misalignment between the sheet materials 321 and the sheet materials 341 is detected by a sensor or the like. In the case where the misalignment between the sheet materials 321 and the sheet materials 341 occurs, a worker may execute the process by adjusting or correcting an arrangement angle of the sheet material 321 or the sheet material 341 in the controller 6 by a worker.

First, as will be described in step S10 in FIG. 5 (hereinafter, simply referred to as "S10", and the same applies to the following steps), the controller 6 executes an arrangement process of the sheet materials. The arrangement process in S10 includes a first arranging step of continuously arranging the sheet materials 321 side by side in the transfer passage 2 in the transfer direction T of the transfer passage 2, and a second arranging step of continuously arranging the sheet materials 341 side by side in the transfer direction T, over the sheet materials 321 arranged side by side in the transfer passage 2.

In FIG. 1, when an operation signal is output from the controller 6 to the first arrangement mechanism 42 of the first arrangement unit 4, the sheet materials 321 are arranged on the sheet 31 in the transfer passage 2 by an operation of the first arrangement mechanism 42. As illustrated in FIG. 3, the sheet material 321 is rotated clockwise from the first sub transfer passage 43 and is disposed on the transfer passage 2. The arrangement position of the sheet material 321 is a rear end of the sheet 32, that is, a position adjacent to a rear end of the preceding sheet material 321. Accordingly, the sheet materials 321 are continuously arranged side by side in the transfer direction T.

On the other hand, in FIG. 1, when an operation signal is output from the controller 6 to the second arrangement mechanism 52 of the second arrangement unit 5, the sheet materials 341 are arranged on the sheet 33 in the transfer passage 2 by an operation of the second arrangement mechanism 52. As illustrated in FIG. 3, the sheet material 341 is rotated counterclockwise from the second sub transfer passage 53 and is disposed on the transfer passage 2. The arrangement position of the sheet material 341 is a rear end of the sheet 34, that is, a position adjacent to a rear end of the preceding sheet material 341. Accordingly, the sheet materials 341 are continuously arranged side by side in the transfer direction T.

The controller 6 proceeds to S12 in FIG. 5. The controller 6 determines whether or not the sheet materials are misaligned. A determination process in S12 is a process of determining whether or not the sheet material 321 and the sheet material 341 are arranged at predetermined positions in a case where the sheet material 321 and the sheet material 341 are arranged in the transfer passage 2 at the same timing. In other words, the determination process is a process of determining whether or not the sheet material 321 and the sheet material 341 can be arranged at the same timing in the case of being arranged in the transfer passage 2. In the determination process, for example, the positions of the sheet material 321 and the sheet material 341 may be detected by a sensor, and the controller 6 may determine whether or not the arrangement positions of the sheet material 321 and the sheet material 341 are predetermined positions. In the determination process, a worker may determine whether or not the arrangement positions of the sheet material 321 and the sheet material 341 are at the specified positions.

For example, in FIG. 3, in a case where the sheet material 321 can be transferred from the first sub transfer passage 43 to the transfer passage 2 and the sheet material 321 can be connected to the preceding sheet material 321, and the sheet material 341 can be transferred from the second sub transfer passage 53 to the transfer passage 2 and the sheet material 341 can be connected to the preceding sheet material 341, it is determined that the sheet materials 321 and the sheet materials 341 are not misaligned. The controller 6 may determine whether or not the arrangement positions of the sheet materials 321 and the sheet materials 341 are predetermined positions based on, for example, the arrangement positions of the sheet materials 321 and the sheet materials 341 or a connection state of the sheet materials 321 and the sheet materials 341 or the like.

On the other hand, in a case where the sheet material 321 cannot be transferred from the first sub transfer passage 43 to the transfer passage 2 and the sheet material 321 cannot be connected to the preceding sheet material 321, or the sheet material 341 cannot be transferred from the second sub transfer passage 53 to the transfer passage 2 and the sheet material 341 cannot be connected to the preceding sheet material 341, it is determined that either the sheet materials 321 or the sheet materials 341 is misaligned. For example, in the case where the sheet material 321 and the sheet material 341 have different sizes, or in the case where the sheet material 321 and the sheet material 341 are different from each other in terms of a curved state or a bent state, the misalignment may occur.

In the case where it is determined in S12 of FIG. 5 that the sheet materials are not misaligned, a series of control processes in FIG. 5 are ended. In this case, the layered product 3 is smoothly manufactured. The sheets 31 to 34 are continuously layered.

On the other hand, in a case where it is determined in S12 of FIG. 5 that the sheet materials are misaligned, the arrangement pitch of the sheet materials is adjusted (S14). The adjustment process of the arrangement pitch in S14 is a process of adjusting the arrangement pitch of the sheet materials arranged in the transfer passage 2 to suppress the misalignment of the sheet materials. For example, in a case where the sheet material 341 is disposed at a still later timing than the sheet material 321 to cause the misalignment, as illustrated in FIG. 4, the sheet material 341 is disposed to be inclined with respect to the transfer direction T and the arrangement pitch of the sheet material 341 is adjusted. Hence, the misalignment is suppressed.

As illustrated in FIG. 4(A), in a case where a rotation angle of the sheet material 341 is the angle α, the sheet material 341 is disposed such that one side (cut side 341a) of the sheet material 341 is parallel to the transfer direction T. At this time, the arrangement pitch of the sheet material 341 disposed in the transfer passage 2 becomes L. On the other hand, as illustrated in FIG. 4(B), in a case where the arrangement pitch of the sheet material 341 is adjusted, the rotation angle of the sheet material 341 is the angle α-β. The angle α and the angle β are positive angles. In this case, the sheet material 341 is disposed such that the one side (cut side 341a) of the sheet material 341 is inclined by the angle β from the transfer direction T. Therefore, the arrangement pitch L1 of the sheet material 341 disposed in the transfer passage 2 is shorter than the arrangement pitch L. Accordingly, the arrangement pitch of the sheet material 341 is shortened, and the misalignment of the sheet materials is curbed. The angle β may be appropriately set according to a situation of the misalignment.

In FIGS. 4(A) and 4(B), the case where the arrangement pitch of the sheet material 341 is adjusted to curb the misalignment has been described, but the arrangement pitch of the sheet material 321 may be adjusted to curb the misalignment. As illustrated in FIG. 6(A), in a case where a rotation angle of the sheet material 321 is the angle α, the sheet material 341 is disposed such that one side (cut side 321a) of the sheet material 321 is parallel to the transfer direction T. At this time, the arrangement pitch of the sheet material 321 disposed in the transfer passage 2 becomes L. On the other hand, as illustrated in FIG. 6(B), in a case where the arrangement pitch of the sheet material 321 is adjusted, the rotation angle of the sheet material 321 is an angle α+β. In this case, the sheet material 341 is disposed such that the one side (cut side 321a) of the sheet material 321 is inclined by the angle β from the transfer direction T. Therefore, the arrangement pitch L2 of the sheet material 321 disposed in the transfer passage 2 is longer than the arrangement pitch L. Accordingly, the arrangement pitch of the sheet material 321 is elongated, and the misalignment of the sheet materials is suppressed. When the adjustment process of the arrangement pitch in S14 is ended, the controller 6 ends the series of control processes in FIG. 5.

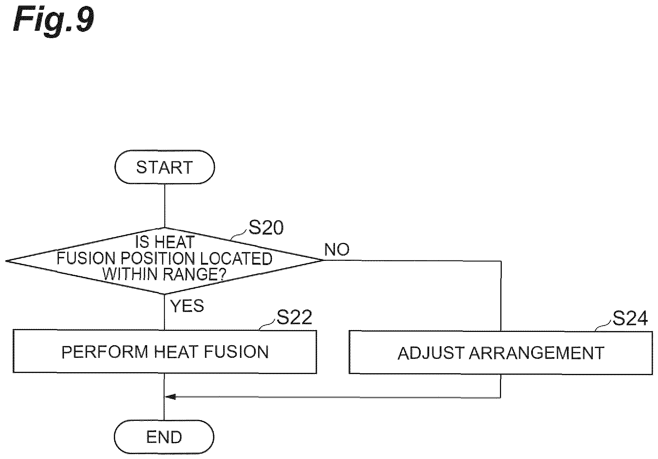

FIG. 9 is a flowchart illustrating a heat fusion control process in the method for manufacturing a layered product and the device for manufacturing a layered product according to the embodiments. The heat fusion control process is a process of controlling heat fusion so that the heat fusion of the sheet material 321 and the sheet material 341 is performed within the heat fusion possible range. The heat fusion control process is executed by the controller 6, for example, when the sheet materials 321 and the sheet materials 341 are arranged in the transfer passage 2.

First, as illustrated in S20 of FIG. 9, the controller 6 determines whether or not a heat fusion position of the sheet material 321 is located within the heat fusion possible range 231 and a heat fusion position of the sheet material 341 is located within the heat fusion possible range 261. In the determination process of S20, the controller 6 determines whether or not a heat fusion position (connection position) between a rear end of the preceding sheet material 321 and a front end of the subsequent sheet material 321 is located within the heat fusion possible range 231. In the determination process of S20, the controller 6 determines whether or not a heat fusion position between a rear end of the preceding sheet material 341 and a front end of the subsequent sheet material 341 is located within the heat fusion possible range 261. For example, the controller 6 may perform the determination process of S20 based on detection results obtained by sensors at both the heat fusion position between the preceding sheet material 321 and the subsequent sheet material 321 and the heat fusion position between the preceding sheet material 341 and the subsequent sheet material 341.

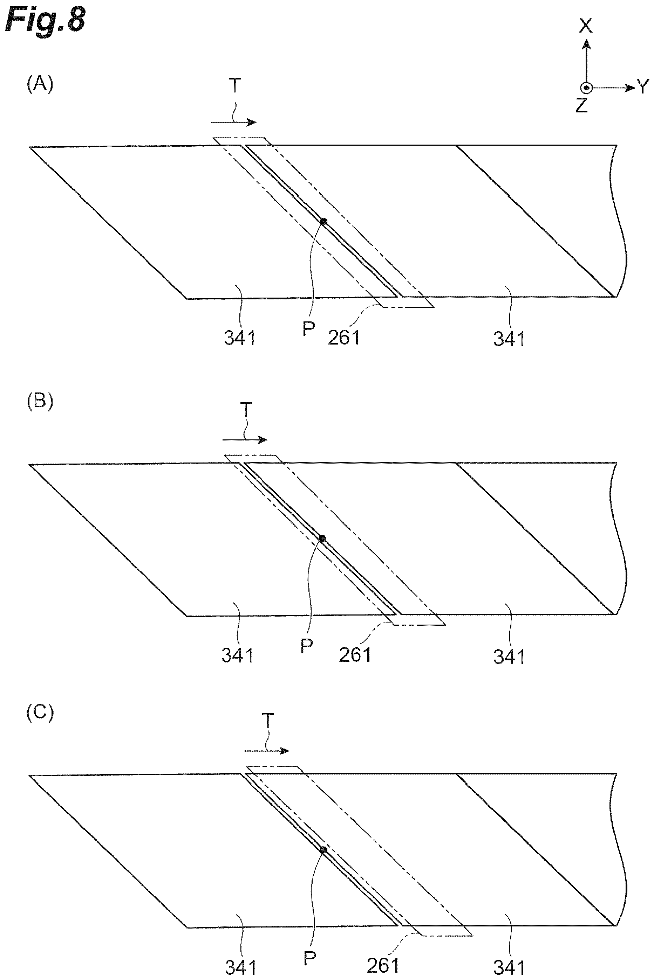

For example, as illustrated in FIG. 8(A), in a case where a heat fusion position P between the preceding sheet material 341 and the subsequent sheet material 341 is located near a center in the heat fusion possible range 261, the controller 6 determines that the heat fusion position P of the sheet materials 341 is located within the heat fusion possible range 261. As illustrated in FIG. 8(B), in a case where the heat fusion position P between the preceding sheet material 341 and the subsequent sheet material 341 is located near an end portion in the heat fusion possible range 261, the controller 6 determines that the heat fusion position P of the sheet materials 341 is located within the heat fusion possible range 261. On the other hand, as illustrated in FIG. 8(C), in a case where the heat fusion position P between the preceding sheet material 341 and the subsequent sheet material 341 is located at a position out of the heat fusion possible range 261, the controller 6 determines that the heat fusion position P of the sheet materials 341 is not located within the heat fusion possible range 261. FIG. 8 illustrates the case where the heat fusion of the preceding sheet material 341 and the subsequent sheet material 341 is performed at one position, but the heat fusion of the preceding sheet material 341 and the subsequent sheet material 341 may be performed at several positions. FIG. 8 illustrates an example of determining whether or not the heat fusion position P of the sheet materials 341 is located within the heat fusion possible range 261. However, it may be determined whether or not the heat fusion position of the sheet materials 321 is located within the heat fusion possible range 231 also for the sheet material 321.

In a case where it is determined in S20 of FIG. 9 that the heat fusion position of the sheet materials 321 is located within the heat fusion possible range 231 and the heat fusion position of the sheet materials 341 is located within the heat fusion possible range 261, the controller 6 performs the heat fusion on the sheet materials 321 and the sheet materials 341 in S22. The heat fusion of the preceding sheet material 321 and the subsequent sheet material 321 is performed by the first heat fusion unit 23. The heat fusion of the preceding sheet material 341 and the subsequent sheet material 341 is performed by the third heat fusion unit 26.

On the other hand, in a case where it is determined in S20 that the heat fusion position of the sheet materials 321 is not located within the heat fusion possible range 231 or the heat fusion position of the sheet materials 341 is not located within the heat fusion possible range 261, it is not possible to perform the heat fusion of the sheet materials 321 or the sheet materials 341 within the heat fusion possible ranges, and thus the controller 6 adjusts the arrangement position of the sheet materials 321 in the transfer direction T or adjusts the arrangement position of the sheet materials 341 in the transfer direction T (S24). The adjustment process of S24 is a process of adjusting the arrangement position of one or both of the sheet material 321 and the sheet material 341 arranged on the transfer passage 2. For example, in a state where the preceding sheet material 321 and the preceding sheet material 341 arranged in the transfer passage 2 are moved in the transfer direction, the arrangement of the sheet materials 321 in the transfer passage 2 by the first arrangement mechanism 42 and the arrangement of the sheet materials 341 in the transfer passage 2 by the second arrangement mechanism 52 are simultaneously performed, and thereby the arrangement positions of the sheet materials 321 and the sheet materials 341 in the transfer passage 2 are adjusted. Accordingly, the misalignment between the sheet materials 321 and the sheet materials 341 is reset and eliminated. Hence, the subsequent arrangement and heat fusion of the sheet materials 321 and the sheet materials 341 can be appropriately performed. The layered product 3 can be efficiently manufactured. When the process of S22 or S24 is ended, the controller 6 ends the series of control processes in FIG. 9.

As described above, according to the device 1 for manufacturing a layered product and the method for manufacturing a layered product according to the present embodiments, in the case where the sheet materials 321 are continuously arranged side by side in the transfer passage 2 and the sheet materials 341 are arranged side by side at downstream positions therefrom, the arrangement pitch of the sheet materials 321 in the transfer direction T can be adjusted by tilting the sheet materials 321 with respect to the transfer direction T. In the case where the sheet materials 321 are continuously arranged side by side in the transfer passage 2 and the sheet materials 341 are arranged side by side at the downstream positions therefrom, the arrangement pitch of the sheet materials 341 in the transfer direction T can be adjusted by tilting the sheet materials 341 with respect to the transfer direction T. For example, even in the case where the arrangement pitches of the sheet materials 321 and the sheet materials 341 are different from each other due to a difference between sizes thereof, the arrangement pitches of the sheet materials 321 and the sheet materials 341 in the transfer direction T can be adjusted to be equal to each other by tilting the sheet materials 321 or the sheet materials 341 with respect to the transfer direction T. Therefore, the sheet materials 321 and the sheet materials 341 can be arranged at the same timing. It is possible to efficiently manufacture the layered product 3 in which the sheet materials 321 and the sheet materials 341 are layered.

In the device 1 for manufacturing a layered product and the method for manufacturing a layered product according to the present embodiments, the sheet material 321 and the sheet material 341 have the parallelogramic shape with two opposite angles which are acute angles, and in the first arranging step and the second arranging step, the arrangement pitch of the sheet materials 321 or the sheet materials 341 in the transfer direction T is adjusted by arranging one side of the sheet material 321 or the sheet material 341 to be inclined with respect to the transfer direction T. Therefore, the sheet materials 321 and the sheet materials 341 can be arranged at the same timing. It is possible to efficiently manufacture the layered product 3 in which the sheet materials 321 and the sheet materials 341 are layered.

In the device 1 for manufacturing a layered product and the method for manufacturing a layered product according to the present embodiments, in the case where the heat fusion position of the sheet materials 321 or the sheet materials 341 is not located within the heat fusion possible range, the arrangement position of the sheet materials 321 in the transfer direction T or the arrangement position of the sheet materials 341 in the transfer direction T is adjusted. Accordingly, the misalignment between the sheet materials 321 and the sheet materials 341 is reset and eliminated. Hence, the subsequent arrangement and heat fusion of the sheet materials 321 and the sheet materials 341 can be appropriately performed. The layered product 3 can be efficiently manufactured.

In the device 1 for manufacturing a layered product and the method for manufacturing a layered product according to the present embodiments, the sheet materials 321 and the sheet materials 341 are fiber sheets in which fibers are arranged in a certain direction. Therefore, the layered product in which the plurality of fiber sheets are layered can be efficiently manufactured.

As described above, the device 1 for manufacturing a layered product and the method for manufacturing a layered product according to the embodiments of the present disclosure have been described, but the device for manufacturing a layered product and the method for manufacturing a layered product of the present disclosure are not limited to the above-described embodiments. The present disclosure can include various modifications within a range without departing from the gist of the claims.

For example, in the above-described embodiments, the layered product is manufactured by layering the fiber sheets, but may be manufactured by layering sheets other than the fiber sheets. Even in this case, it is possible to obtain operational effects similar to those of the device for manufacturing a layered product and the method for manufacturing a layered product according to the above-described embodiments.

In the above-described embodiments, the example in which the sheet material 321 and the sheet material 341 are cut into a parallelogram has been described, but the present disclosure is not limited to this example. The sheet material 321 and the sheet material 341 may be cut into a shape other than the parallelogram as long as the shape allows the arrangement pitches to be adjusted by arranging the sheet material 321 and the sheet material 341 to be inclined. Even in this case, it is possible to obtain operational effects similar to those of the device for manufacturing a layered product and the method for manufacturing a layered product according to the above-described embodiments.

In the above-described embodiments, the first arrangement unit 4 includes the first supply mechanism 41, but the present disclosure is not limited to this example. As long as the sheet materials 321 can be arranged in the transfer passage 2, a first supply mechanism having a different configuration may be used, or the installation of the first supply mechanism 41 may be omitted. In the above-described embodiments, the second arrangement unit 5 includes the second supply mechanism 51, but the present disclosure is not limited to this example. As long as the sheet materials 341 can be arranged in the transfer passage 2, a second supply mechanism having a different configuration may be used, or the installation of the second supply mechanism 51 may be omitted.

In the above-described embodiments, the sheets 31 to 34, the sheet materials 321, and the sheet materials 341 may be sheets other than fiber sheets. For example, the sheets 31 to 34 may be sheets having an orientation such as a magnetic field. In the above-described embodiments, the example in which the four sheets are layered has been described, but the present disclosure is not limited to this example. Two, three, or more than five sheets may be layered.

### [Supplementary Notes]

The present disclosure includes the following configurations.

The method for manufacturing a layered product of the present disclosure is
[1] "a method for manufacturing a layered product by which a plurality of sheets are layered to manufacture the layered product, the method including:
   a first arranging step of continuously arranging first sheet materials in a transfer passage for performing transfer of the sheets along a transfer direction of the transfer passage; and
   a second arranging step of continuously arranging second sheet materials in the transfer direction above the first sheet materials arranged in the transfer passage, in which
   in the second arranging step, the second sheet materials are arranged at downstream positions of the transfer passage with respect to arrangement positions of the first sheet materials, and
   in the first arranging step, an arrangement pitch of the first sheet materials in the transfer direction is adjustable by tilting the first sheet materials with respect to the transfer direction, or
   in the second arranging step, an arrangement pitch of the second sheet materials in the transfer direction is adjustable by tilting the second sheet materials with respect to the transfer direction".
   The method for manufacturing a layered product of the present disclosure is
[2] "the method for manufacturing a layered product according to [1], in which,
   in the first arranging step, the arrangement pitch of the first sheet materials in the transfer direction is adjustable by adjusting an inclined angle of the first sheet materials with respect to the transfer direction, or
   in the second arranging step, the arrangement pitch of the second sheet materials in the transfer direction is adjustable by adjusting an inclined angle of the second sheet materials with respect to the transfer direction".
   The method for manufacturing a layered product of the present disclosure is
[3] "the method for manufacturing a layered product according to [1] or [2], in which,
   the first sheet materials and the second sheet materials are sheet materials having a parallelogramic shape with two opposite angles which are acute angles, and in the first arranging step,
   the arrangement pitch of the first sheet materials in the transfer direction is adjustable by arranging the first sheet materials to have one side inclined with respect to the transfer direction, or
   in the second arranging step, the arrangement pitch of the second sheet materials in the transfer direction is adjustable by arranging one side of the second sheet materials to be inclined with respect to the transfer direction".
   The method for manufacturing a layered product of the present disclosure is
[4] "the method for manufacturing a layered product according to any one of [1] to [3], further including:
   a first heat-fusing step of performing heat fusion on the first sheet materials arranged in the first arranging step to previously arranged first sheet materials; and
   a second heat-fusing step of performing heat fusion on the second sheet materials arranged in the second arranging step to previously arranged second sheet materials, in which
   in the first heat-fusing step,
   a heat fusion possible range having a width in the transfer direction is set,
   the heat fusion is performed on the first sheet materials and the previously arranged first sheet materials within the heat fusion possible range, and
   in the case where no heat fusion is performable on the first sheet materials within the heat fusion possible range, the arrangement positions of the first sheet materials in the transfer direction in the first arranging step are adjusted, and
   in the second heat-fusing step,
   a heat fusion possible range having a width in the transfer direction is set,
   the heat fusion is performed on the second sheet materials and the previously arranged second sheet materials within the heat fusion possible range, and
   in a case where no heat fusion is performable on the second sheet materials within the heat fusion possible range, the arrangement positions of the second sheet materials in the transfer direction in the second arranging step are adjusted".
   The method for manufacturing a layered product of the present disclosure is
[5] "the method for manufacturing a layered product according to any one of [1] to [4], in which
   the first sheet materials and the second sheet materials are fiber sheets in which fibers are arranged in a certain direction".
   The device for manufacturing a layered product of the present disclosure is
[6] "a device for manufacturing a layered product which layers a plurality of sheets to manufacture the layered product, the device including:
   a first arrangement unit configured to continuously arrange first sheet materials for performing transfer of the sheets along a transfer passage in a transfer direction of the transfer passage;
   a second arrangement unit configured to continuously arrange second sheet materials along the transfer direction above the first sheet materials arranged in the transfer passage; and
   an arrangement adjusting unit configured to tilt the first sheet materials arranged in the transfer passage to be inclined with respect to the transfer direction such that an arrangement pitch of the first sheet materials in the transfer direction is adjustable, or to arrange the second sheet materials arranged in the transfer passage to be inclined with respect to the transfer direction such that an arrangement pitch of the second sheet materials in the transfer direction is adjustable".

### Reference Signs List

- 1: Device for manufacturing a layered product

- 2: Transfer passage
- 3: Layered product
- 4: First arrangement unit
- 5: Second arrangement unit
- 21: Pull-out roller
- 22: First pressing roller
- 23: First heat fusion unit
- 24: Second pressing roller
- 25: Second heat fusion unit
- 26: Third heat fusion unit
- 31: Sheet
- 32: Sheet
- 33: Sheet
- 34: Sheet
- 42: First arrangement mechanism
- 43: First sub transfer passage
- 52: Second arrangement mechanism
- 53: Second sub transfer passage
- 321: Sheet material (first sheet material)
- 341: Sheet material (second sheet material)
- T: Transfer direction
- L: Arrangement pitch
- L1: Arrangement pitch
- L2: Arrangement pitch

## Claims

1. A method for manufacturing a layered product by which a plurality of sheets are layered to manufacture the layered product, the method comprising:
a first arranging step of continuously arranging first sheet materials in a transfer passage for performing transfer of the sheets along a transfer direction of the transfer passage; and
a second arranging step of continuously arranging second sheet materials along the transfer direction above the first sheet materials arranged in the transfer passage, wherein
in the second arranging step, the second sheet materials are arranged at downstream positions of the transfer passage with respect to arrangement positions of the first sheet materials, and
in the first arranging step and the second arranging step, an arrangement pitch of the first sheet materials or the second sheet materials in the transfer direction is adjustable by tilting the first sheet materials or the second sheet materials with respect to the transfer direction.

2. The method for manufacturing a layered product according to claim 1, wherein,
in the first arranging step and the second arranging step, the arrangement pitch of the first sheet materials or the second sheet materials in the transfer direction is adjustable by adjusting an angle at which the first sheet materials or the second sheet materials is inclined with respect to the transfer direction.

3. The method for manufacturing a layered product according to claim 1 or 2, wherein
the first sheet materials and the second sheet materials are sheet materials having a parallelogramic shape with two opposite angles which are acute angles, and
in the first arranging step and the second arranging step, the arrangement pitch of the first sheet materials or the second sheet materials in the transfer direction is adjustable by arranging one side of the first sheet materials or the second sheet materials to be inclined with respect to the transfer direction.

4. The method for manufacturing a layered product according to claim 1 or 2, further comprising:
a first heat-fusing step of performing heat fusion of first sheet materials arranged in the first arranging step to previously arranged first sheet materials; and
a second heat-fusing step of performing heat fusion of the second sheet materials arranged in the second arranging step to previously arranged second sheet materials, wherein
in the first heat-fusing step and the second heat-fusing step, a heat fusion possible range having a width in the transfer direction is set, the heat fusion is performed on the first sheet materials and the previously arranged first sheet materials within the heat fusion possible range, and the heat fusion is performed on the second sheet materials and the previously arranged second sheet materials within the heat fusion possible range, and
in a case where no heat fusion is performable on the first sheet materials or the second sheet materials within the heat fusion possible range in the first heat-fusing step and the second heat-fusing step, arrangement positions of the first sheet materials in the transfer direction in the first arranging step or arrangement positions of the second sheet materials in the transfer direction in the second arranging step are adjusted.

5. The method for manufacturing a layered product according to claim 1 or 2, wherein
the first sheet materials and the second sheet materials are fiber sheets in which fibers are arranged in a certain direction.

6. A device for manufacturing a layered product which layers a plurality of sheets to manufacture the layered product, the device comprising:
a first arrangement unit configured to continuously arrange first sheet materials in a transfer passage for performing transfer of the sheets along a transfer direction of the transfer passage;
a second arrangement unit configured to continuously arrange second sheet materials along the transfer direction above the first sheet materials arranged in the transfer passage; and
an arrangement adjusting unit configured to tilt the first sheet materials or the second sheet materials arranged in the transfer passage with respect to the transfer direction, and configured to adjust an arrangement pitch of the first sheet materials or the second sheet materials in the transfer direction.
